# EUROPÄISCHE PATENTSCHRIFT

(11) **EP 1 865 203 B1**
(45) Veröffentlichungstag und Bekanntmachung des Hinweises auf die Patenterteilung: **12.05.2010**
(21) Anmeldenummer: 07009461.0
(22) Anmeldetag: 11.05.2007
(51) Int. Cl.: F04D 15/00, F04D 15/02

(54) **Pumpenanordnung mit Drehzahlsteuerung**
Pump assembly with rotational speed control
Dispositif de pompage doté d'une commande de la vitesse de rotation

(30) Priorität: 08.06.2006 DE 102006027002
(43) Veröffentlichungstag der Anmeldung: 12.12.2007
(73) Patentinhaber: Oase GmbH, 48477 Hörstel-Riesenbeck (DE)
(72) Erfinder: Hanke, Andreas, 65520 Bad Camberg (DE); Bülter, Christopher, 48477 Hörstel (DE); Lambers, Herbert, 48477 Hörstel (DE)
(74) Vertreter: Bünemann, Egon

(56) Entgegenhaltungen:
- EP-A- 1 323 986
- EP-A1- 0 019 743
- DE-A- 19 706 424
- DE-A1- 10 043 668
- DE-A1- 10 046 085
- US-A- 2 859 768

## Beschreibung

Die Erfindung betrifft eine Pumpenanordnung mit zumindest einer Wasserpumpe und einer Steuerung für deren Drehzahl, wobei die Pumpe zum Umwälzen von Wasser in biologischen Einflüssen unterworfenen Gewässern wie beispielsweise Teichen, Aquarien oder Springbrunnen ausgelegt ist. Derartige Pumpen können sowohl zur Speisung von Filtern dienen als auch Wasserspiele oder Fontainen betreiben und/oder auf andere Weise den Gasaustausch und den Sauerstoffeintrag verbessern sowie im Winter durch Umwälzung einen Schutz durch des Gewässers vorm Zufrieren bewirken. Gewässer oder Wasserbehältnisse, in denen derartige Pumpen eingesetzt werden, können biologischen Einflüssen durch sich ändernde Außen- und Wassertemperaturen ausgesetzt sein. Weitere biologische Einflüsse sind beispielsweise ein Trübungsgrad des Gewässers, eventuelle Schadstoffbelastung, Veränderung des Sauerstoffgehaltes oder dergleichen.

Da sich bei höheren Temperaturen in dem Gewässer auch die biologische Reaktionsgeschwindigkeit erhöht, geht dies mit diesem einen erhöhten Sauerstoffverbrauch einher. Es ist daher sinnvoll, derartige Pumpen bei höheren Temperaturen mit einer erhöhten Drehzahl laufen zu lassen, damit der Umwälzgrad des Wassers entsprechend angepaßt ist. Bei herkömmlichen Pumpen erfolgt diese Steuerung der Drehzahl manuell. D.h. der Betreiber einer solchen Pumpe beobachtet die biologischen Einflüsse auf sein Gewässer und regelt dann die Drehzahl der Pumpe zur Beeinflussung des umgewälzten Wasservolumens entsprechend ein. Da dies mit einer ständigen Beobachtung des Gewässers und der Umwelteinflüsse verbunden ist, wird die Pumpe aus Bequemlichkeitsgründen häufig einen wesentlichen Teil des Jahres unter Volllast, d.h. mit maximaler Drehzahl laufengelassen, ohne daß dafür eine Notwendigkeit besteht. Hierdurch wird unnötig viel Energie verbraucht.

Der Erfindung liegt daher die Aufgabe zugrunde, eine Pumpenanordnung zu schaffen, deren Bedienkomfort erhöht ist und die eine Energieeinsparung möglich macht.

Aus der EP 0 019 743 A1, der DE 100 46 085 A1 und der EP 1 323 986 A1 sind Heizungsumwälzpumpen bekannt. Die aus EP 0 019 743 A1 bekannte Pumpenanordnung weist eine Wasserpumpe und eine temperaturabhängige Steuerung auf, welche die technischen Merkmale gemäß dem Oberbegriff von Anspruch 1 aufweist.

Die der Erfindung zugrunde liegende Aufgabe kann gelöst werden, indem eine Temperatursteuerung für das spezielle Anwendungsgebiet von Pumpen für biologischen Einflüssen unterworfene Gewässer oder Wasserbehältnisse modifiziert und durch eine Steuerelektronik, einen Datenspeicher und eine Steuersoftware ergänzt wird. Diese ist speziell so ausgelegt, dass ein Maximaltemperaturgrenzwert vorgegeben ist, ab dem die Steuerung die Pumpe zum Betrieb mit maximaler Drehzahl regelt, und ein Minimaltemperaturgrenzwert vorgegeben ist, bei dessen Unterschreitung die Steuerung die Drehzahl der Pumpe nicht weiter absenkt, sondern erhöht. Durch diese Steuersoftware erhöht die Pumpe die Drehzahl innerhalb des Temperaturbereichs zwischen den beiden Grenzwerten automatisch mit zunehmender Temperatur, während bei Temperaturen unter der im Datenspeicher hinterlegten Minimaltemperatur die Drehzahl und damit der Umwälzgrad der Pumpe wieder erhöht statt weiter abgesenkt wird. Dadurch wird auch bei niedrigen Temperaturen beispielsweise im Winterbetrieb ein optimaler Gasaustausch und der notwendige Sauerstoffeintrag gewährleistet sowie ein Schutz vorm Zufrieren sichergestellt. Die gemessenen Temperaturwerte werden direkt und automatisch zur Regelung der Drehzahl der Pumpe verwendet. Ein vollautomatischer Betrieb der Pumpe im optimalen Leistungs- und Drehzahlbereich, ohne dass manuelle Eingriffe erforderlich sind, ist dadurch das ganze Jahr hindurch möglich.

Die Pumpenanordnung ist besonders komfortabel in der Bedienung und flexibel im Einsatzzweck ausgestattet, indem die Steuerung eine Steuerelektronik und einen Datenspeicher mit einer Steuersoftware aufweist. Die Steuersoftware kann auch im Bedarfsfall ausgetauscht werden, wenn sich grundlegende Gegebenheiten des Gewässers, z.B. dessen Größe, die Höhe des Fischbesatzes, der Bewuchs oder andere klimatische oder biologische Verhältnisse gravierend ändern.

Im Datenspeicher ist ein Temperaturgrenzwert als Maximaltemperatur hinterlegt, ab der und bei Temperaturen darüber die Steuerung die Pumpe immer mit maximaler Drehzahl laufen lässt. Für Temperaturen unterhalb des oberen Temperaturgrenzwertes können Teillasttemperaturgrenzwerte vorgegeben sein, bei denen eine gestufte Anpassung der Pumpendrehzahl erfolgt. Da sich bei einer Temperaturerhöhung von 10 Kelvin die biologische Reaktionsgeschwindigkeit und damit auch der Sauerstoffverbrauch verdoppelt, ist die Steuerung bevorzugt so ausgelegt, daß sich als Folge davon auch der Umwälzgrad, d.h. die Drehzahl, verdoppelt.

Eine mögliche energiesparende Auslegung der Pumpe könnte so gewählt sein, daß bei Wassertemperaturen von 6 bis 8 °C eine minimale Wassermenge von 3.500 l/h umgewälzt wird. Bei Temperaturen zwischen 8 °C und 20 °C könnte die Wassermenge und der Umwälzgrad kontinuierlich oder gestuft erhöht werden. Beispielsweise kann eine mittlere Drehzahl bei Temperaturen zwischen 15 und 18°C vorgesehen sein. Ab einem Temperaturgrenzwert von 20 °C sollte dann die Pumpe mit maximaler Drehzahl zur maximalen Umwälzung laufen.

Die Erhöhung der Drehzahl der Pumpe bei sich erhöhenden Wassertemperaturen kann linear erfolgen. Aufgrund der Erhöhung der biologischen Reaktionsgeschwindigkeit ist in vielen Fällen jedoch zumindest bereichsweise auch eine Erhöhung in exponentieller Abhängigkeit sinnvoll.

Die erfindungsgemäße Pumpenanordnung wird vorzugsweise bei Pumpen mit einem elektronisch kommutierten Antrieb (EC-Pumpen) eingesetzt. Besonders vorteilhaft ist es dabei, die Steuerung und den Temperatursensor direkt in die Pumpe zu integrieren. Es ist aber ebenfalls möglich, eine externe Elektronik und/oder Sensorik einzusetzen, die auch mit konventionellen Asynchron- oder Synchronpumpen betrieben werden kann.

Ein Ausführungsbeispiel einer Pumpe mit integrierter Steuerung wird nachfolgend anhand eines Ausführungsbeispiels in den Figuren beschrieben; es zeigen:
- Fig. 1: schematisch einen Querschnitt durch eine erfindungsgemäße Pumpe und
- Fig. 2: einen Schnitt in Richtung II-II durch den Gegenstand aus Fig. 1.

Die dargestellte Pumpe besitzt ein Gehäuse 1 mit einem Ansaugstutzen 2, durch den das Wasser in die Pumpe hineintritt, und einem Druckstutzen 3, über den das Wasser die Pumpe wieder verläßt. Gefördert wird das Wasser über ein Laufrad 4, das über eine Welle 5 von einem Elektromotor 6 angetrieben wird. Der Elektromotor 6 besitzt einen Rotor 7, der durch ein aus Elektrospulen 8 gebildetes elektromagnetisches Feld in Drehung versetzt wird. Ein Spaltrohr 9 trennt den wasserdurchflossenen Bereich 1' des Gehäuses 1 von dem elektrischen und damit trocken zu haltenden Gehäusebereich 1" ab. Vorzugsweise ist in dem elektrischen Bereich 1" auch eine Steuerelektronik 11 angeordnet, über die die Drehzahl des Motors und damit auch der Pumpe geregelt wird. Im Inneren des Gehäuses ist außerdem ein Temperatursensor 12 angeordnet, der die Temperatur des an ihm vorbeibeförderten Wassers an der Position des Pfeils 13 mißt. Der Temperatursensor 12 ist auf nicht dargestellte Weise mit der Steuerelektronik 11 verbunden.

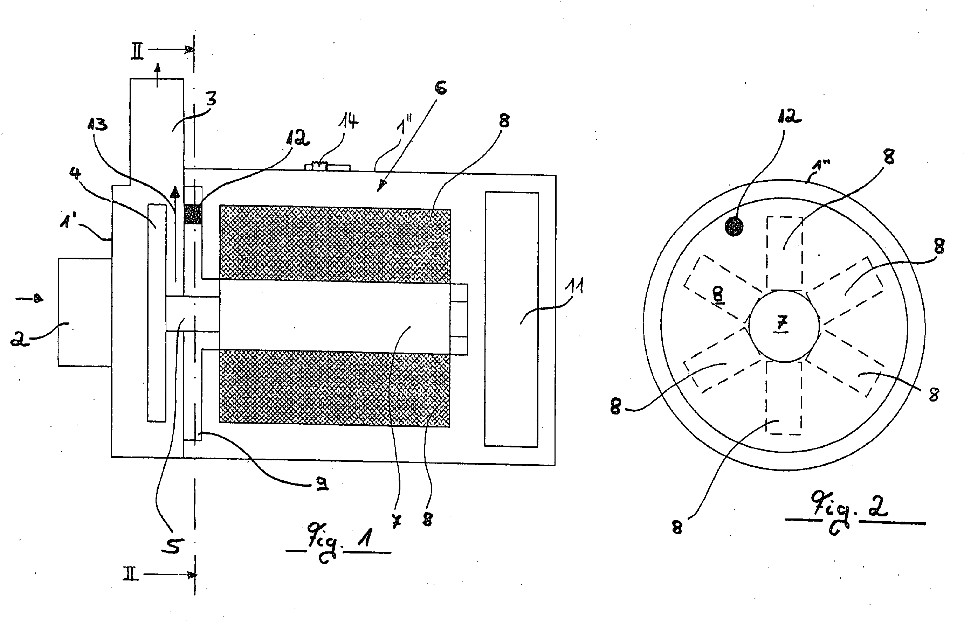

Bevorzugt ist der Temperatursensor 12 so angeordnet, daß er möglichst wenig Eigenwärme der Pumpe aufnimmt, um eine weitestgehend unbeeinflußte Wassertemperaturmessung durchführen zu können. Eine besonders vorteilhafte Position des Temperatursensors 12 ist in den Fig. 1 und 2 dargestellt. Die Anordnung des Temperatursensors 12 ist dabei so gewählt, daß er sich genau im Übergang zwischen dem wasserdurchflossenen Bereich 1' des Gehäuses und dem elektrischen Bereich 1" des Gehäuses befindet. So kann eine Messung der Temperatur im wasserdurchflossenen Bereich erfolgen, während eine technisch sichere und trockene Anbindung an die Steuerelektronik 11 im elektrischen Bereich 1" der Pumpe möglich ist. Vorteilhaft ist der Temperatursensor 12 dazu im Flansch des Spaltrohrs 9 aufgenommen. Diese Position wird dadurch optimiert, daß der Temperatursensor in möglichst großer Entfernung von jeder der Spulen 8 des Pumpenmotors 6 anzuordnen ist. Bei wie dargestellt sternförmig angeordneten Spulen 8 befindet sich eine solche vorteilhafte Position des Temperatursensors 12 genau mittig in einem freien Segment zwischen zwei Spulen (sh. Fig. 2).

An der Gehäuseoberseite befindet sich von außen zugänglich ein Schalter 14, über den über eine nicht dargestellte Verbindung zur Steuerelektronik 11 die Regelung in Abhängigkeit von der am Temperatursensor 12 gemessenen Wassertemperatur ein- oder ausgeschaltet werden kann. Über diesen Schalter kann daher zwischen manueller Steuerung und automatischem Betrieb gewechselt werden.

Neben dem Temperatursensor 12 kann die gesamte Pumpenanordnung noch weitere Sensorik beispielsweise zur Erfassung der Gewässertrübung oder des aktuellen Sauerstoffgehalts beinhalten. Diese Signale können ebenfalls von der Steuerelektronik ausgewertet werden und über die Steuersoftware in die Drehzahlregelung einfließen. Da der wesentlichste Einflußfaktor jedoch die Wassertemperatur ist, sind auch Pumpenanordnungen, die ausschließlich einen Temperatursensor aufweisen, bereits sehr effektiv und sparen gegenüber herkömmlichen, manuell geregelten Pumpen durch einen stets optimalen Betrieb erheblich Energie. Derartige Pumpenanordnungen sind ganzjährig fast ohne Wartung und Aufwand zu betreiben. Ihre Steuersoftware kann sozusagen als Jahresbiologieprogramm bezeichnet werden, da eine automatische Anpassung der Pumpenleistung an die Jahreszeiten und die sich dadurch ergebenden Betriebsnotwendigkeiten erzielt wird. Die Steuersoftware kann daneben noch weitere kalendarische oder tageszeitabhängige Einflußfaktoren berücksichtigen und dadurch die Pumpe an die Bedürfnisse des Betreibers und des Gewässers, in dem sie zum Einsatz kommt, noch besser erfüllen.

## Patentansprüche

1. Pumpenanordnung für biologischen Einflüssen unterworfene Gewässer oder Wasserbehältnisse wie zum Beispiel Teiche, Aquarien oder Springbrunnen mit zumindest einer ein Gehäuse (1) aufweisende Wasserpumpe und einer Steuerung für deren Drehzahl und mit wenigstens einem Temperatursensor (12) zur Messung der Wassertemperatur, dessen Signal in der Steuerung verarbeitet und zur Regelung der Drehzahl der Pumpe herangezogen wird, **dadurch gekennzeichnet, dass** der Temperatursensor (12) im Inneren des Gehäuses (1) angeordnet ist und die Temperatur des an ihm vorbeigeförderten Wassers misst und dass die Steuerung im Gehäuse (1) eine Steuerelektronik (11) und einen Datenspeicher mit einer Steuersoftware aufweist, in dem ein Maximaltemperaturgrenzwert vorgegeben ist, ab dem die Steuerung die Pumpe zum Betrieb mit maximaler Drehzahl regelt, und ein Minimaltemperaturgrenzwert vorgegeben ist, bei dessen Unterschreitung die Steuerung die Drehzahl der Pumpe nicht weiter absenkt, sondern erhöht.

2. Pumpenanordnung nach Anspruch 1, **dadurch gekennzeichnet, dass** im Datenspeicher Teillasttemperaturgrenzwerte vorgegeben sind, bei denen die Steuerung eine gestufte Anpassung der Pumpendrehzahl einstellt.

3. Pumpenanordnung nach Anspruch 1 oder 2, **dadurch gekennzeichnet, dass** die Steuerelektronik (11) eine stufenlose Anpassung der Pumpendrehzahl regelt.

4. Pumpenanordnung nach einem der Ansprüche 1 bis 3, **dadurch gekennzeichnet, dass** die Steuerelektronik (11) die Anpassung der Pumpendrehzahl zumindest bereichsweise in linearer Abhängigkeit von der am Temperatursensor (12) gemessenen Temperatur regelt.

5. Pumpenanordnung nach einem der Ansprüche 1 bis 4, **dadurch gekennzeichnet, dass** die Steuerelektronik (11) die Anpassung der Pumpendrehzahl zumindest bereichsweise in exponentieller Abhängigkeit von der am Temperatursensor (12) gemessenen Temperatur regelt.

6. Pumpenanordnung nach einem der vorhergehenden Ansprüche, **dadurch gekennzeichnet, dass** die Steuerung in die Pumpe integriert ist.

7. Pumpenanordnung nach einem der vorhergehenden Ansprüche, **dadurch gekennzeichnet, dass** die Pumpe einen von der Außenseite ihres Gehäuses (1) aus zugänglichen Schalter (14) zur Betätigung der Steuerung aufweist.

8. Pumpenanordnung nach einem der vorhergehenden Ansprüche, **dadurch gekennzeichnet, dass** der Temperatursensor (12) in die Pumpe integriert ist.

9. Pumpenanordnung nach Anspruch 8, **dadurch gekennzeichnet, dass** der Temperatursensor (12) im Inneren des Pumpengehäuses (1) angeordnet ist.

10. Pumpenanordnung nach Anspruch 8 oder 9, **dadurch gekennzeichnet, dass** der Temperatursensor (12) innerhalb des Pumpengehäuses (1) in möglichst großer Entfernung von jeder Spule (8) eines Elektro-Pumpenmotors (6) angeordnet ist.

## Claims

1. Pump arrangement for bodies of water or water containers subject to biological effects such for example as ponds, aquariums or fountains, which pump arrangement has at least one water pump having a casing (1) and has a control system for the speed of the water pump and has at least one temperature sensor (12) for measuring the temperature of the water, the signal from which temperature sensor (12) is processed in the control system and used to regulate the speed of the pump, **characterised in that** the temperature sensor (12) is arranged in the interior of the casing (1) and measures the temperature of the water which is fed past it, and **in that** the control system has, in the casing (1), controlling electronics (11) and a data memory having control software, in which data memory there is preset a maximum limiting value of temperature as from which the control system regulates the pump to operate at a maximum speed, and there is preset a minimum limiting value of temperature which, if dropped below, causes the control system not to continue reducing the speed of the pump but to increase it.

2. Pump arrangement according to claim 1, **characterised in that** there are preset in the data memory limiting values of temperature for part loads, at which limiting values of temperature for part loads the control system sets a staged process of adjusting the pump speed to occur.

3. Pump arrangement according to claim 1 or 2, **characterised in that** the controlling electronics (11) regulates a stepless adjustment of the pump speed.

4. Pump arrangement according to one of claims 1 to 3, **characterised in that**, at least in a range or ranges, the controlling electronics (11) regulates the adjustment of the pump speed as a linear function of the temperature measured at the temperature sensor (12).

5. Pump arrangement according to one of claims 1 to 4, **characterised in that**, at least in a range or ranges, the controlling electronics (11) regulates the adjustment of the pump speed as an exponential function of the temperature measured at the temperature sensor (12).

6. Pump arrangement according to one of the foregoing claims, **characterised in that** the control system is built into the pump.

7. Pump arrangement according to one of the foregoing claims, **characterised in that** the pump has a switch (14) which is accessible from outside its casing (1) to actuate the control system.

8. Pump arrangement according to one of the foregoing claims, **characterised in that** the temperature sensor (12) is built into the pump.

9. Pump arrangement according to claim 8, **characterised in that** the temperature sensor (12) is arranged in the interior of the pump casing (1).

10. Pump arrangement according to claim 8 or 9, **characterised in that** the temperature sensor (12) is arranged inside the pump casing (1) at as great a distance as possible from each winding (8) of an electric motor (6) of the pump.

## Revendications

1. Dispositif de pompage d'eaux usées soumises à des influences biologiques ou de contenants d'eau comme par exemple des étangs, des aquariums ou des jets d'eau doté d'au moins une pompe à eau comprenant un carter (1) et d'une commande pour la vitesse de rotation de ladite pompe et doté d'au moins un capteur de température (12) destiné à mesurer la température de l'eau et dont le signal est traité dans la commande et pris en considération pour régler la vitesse de rotation de la pompe, **caractérisé en ce que** le capteur de température (12) est disposé à l'intérieur du carter (1) et mesure la température de l'eau acheminée devant lui et **en ce que** la commande dans le carter (1) comprend une électronique de commande (11) et une mémoire à logiciel de commande dans laquelle une valeur seuil de température maximale, à partir de laquelle la commande règle la pompe pour qu'elle fonctionne à une vitesse de rotation maximale, est prédéfinie, et une valeur seuil de température minimale, pour laquelle lorsqu'elle n'est pas atteinte la commande ne continue pas de baisser la vitesse de rotation de la pompe, mais l'augmente, est prédéfinie.

2. Dispositif de pompage selon la revendication 1, **caractérisé en ce que** des valeurs seuil de température de charge partielle, pour lesquelles la commande règle une adaptation étagée de la vitesse de rotation de la pompe, sont prédéfinies.

3. Dispositif de pompage selon la revendication 1 ou 2, **caractérisé en ce que** l'électronique de commande (11) règle une adaptation étagée de la vitesse de rotation de la pompe.

4. Dispositif de pompage selon l'une quelconque des revendications 1 à 3, **caractérisé en ce que** l'électronique de commande (11) règle l'adaptation de la vitesse de rotation de la pompe au moins par endroits selon une dépendance linéaire par rapport à la température mesurée sur le capteur de température (12).

5. Dispositif de pompage selon l'une quelconque des revendications 1 à 4, **caractérisé en ce que** l'électronique de commande (11) règle l'adaptation de la vitesse de rotation de la pompe au moins par endroits selon une dépendance exponentielle par rapport à la température mesurée sur le capteur de température (12).

6. Dispositif de pompage selon l'une quelconque des revendications précédentes, **caractérisé en ce que** la commande est intégrée dans la pompe.

7. Dispositif de pompage selon l'une quelconque des revendications précédentes, **caractérisé en ce que** la pompe comprend un interrupteur (14) accessible depuis l'extérieur du carter (1) de la pompe et destiné à actionner la commande.

8. Dispositif de pompage selon l'une quelconque des revendications précédentes, **caractérisé en ce que** le capteur de température (12) est intégré dans la pompe.

9. Dispositif de pompage selon la revendication 8, **caractérisé en ce que** le capteur de température (12) est disposé à l'intérieur du carter de pompe (1).

10. Dispositif de pompage selon la revendication 8 ou 9, **caractérisé en ce que** le capteur de température (12) est disposé à l'intérieur du carter de pompe (1) en étant le plus éloigné possible de chaque bobine (8) d'un moteur électrique de pompe (6).
